# FASCICULE DE BREVET EUROPEEN

(11) **EP 0 458 665 B1**
(45) Date de publication et mention de la délivrance du brevet: **12.01.1994**
(21) Numéro de dépôt: 91401023.6
(22) Date de dépôt: 17.04.1991
(51) Int. Cl.: B60G 9/00, B60G 7/00, B60B 35/06

(54) **Train arrière d'un véhicule automobile**
Hinterradaufhängung eines Kraftfahrzeugs
Automotive vehicle rear-axle assembly

(30) Priorité: 17.05.1990 FR 9006188
(43) Date de publication de la demande: 27.11.1991
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang sur Orge (DE); Barthelemy, André, F-78470 Saint Remy-Les-Chevreuse (FR)
(74) Mandataire: Durand, Yves Armand Louis

(56) Documents cités:
- EP-A- 0 249 537
- FR-A- 700 490
- FR-A- 2 318 754
- GB-A- 2 141 677
- US-A- 2 607 617
- ATZ AUTOMOBILTECHNISCHE ZEITSCHRIFT. vol. 76, no. 10, octobre 1974, STUTTGARTDE pages 316 - 321; J.Beck et al.: "Die Koppellenkerachse für frontgetriebenePersonenwagen - eine Entwicklung von Audi NSU"
- POPULAR SCIENCE. vol. 235, no. 1, juillet 1989, NEW YORK US
- J. Reimpell, "Fahrwerktechnik: Radaufhängungen", 2. Edition 1988, Vogel-Verlag Würzburg

## Description

La présente invention concerne un train arrière de véhicule automobile.

Plus précisément, un tel train arrière est du type à bras tirés, dont chaque extrémité avant est montée pivotante par rapport à la caisse du véhicule autour d'un axe parallèle à l'axe des roues arrière et reliés entre eux par une traverse déformable ayant une grande flexibilité en torsion et disposée au voisinage de l'axe des roues arrière pour que ces dernières débattent avec une bonne flexibilité verticale et qu'en même temps la fonction anti-devers soit correctement assurée par la déformation de la traverse. Pour des raisons de maintien et de guidage latéral du train arrière dans ses mouvements de suspension, on utilise une barre dite Panhard disposée dans un plan horizontal proche de l'axe de rotation des roues arrière.

Cependant, le point d'articulation de la barre Panhard au train arrière décrit un arc de cercle très important presque aussi grand que l'amplitude de la suspension. De ce fait, la flèche de cet arc est très importante, ce qui engendre sur le guidage en ligne droite du train arrière des mouvements latéraux correspondants des roues par rapport à l'axe longitudinal de la caisse du véhicule, lesquels mouvements perturbent la tenue de route du véhicule ayant un effet désagréable ressenti par les passagers et le conducteur du véhicule, effet dû au battement latéral du véhicule sur une route bosselée. En d'autres termes, la barre Panhard n'assure le guidage latéral du train arrière que dans les limites de la flèche associée à son débattement dans le plan vertical. De plus, le train arrière ci-dessus défini, du type porteur, a pour inconvénient que la disposition de la traverse déformable et de la barre Panhard ne laisse pas de place pour la transmission de l'entraînement aux roues arrière. Il est cependant intéressant dans la construction automobile de pouvoir transformer sans frais excessifs un train arrière porteur en train arrière moteur, notamment pour les véhicules à quatre roues motrices.

L'article ATZ Automobiltechnische Zeitschrift, vol. 76, n° 10, d'Octobre 1974, pages 316-321, révèle un train arrière de véhicule automobile (Audi 80) selon le préambule de la revendication 1, comprenant une jambe de force oblique en avant de l'essieu et reliée à l' une de ses extrémités à la caisse du véhicule au voisinage de l'axe de pivotement de l'un des bras tirés. Cependant, la jambe de force a son autre extrémité reliée à la traverse et n'est donc pas suffisamment efficace pour réduire au maximum les mouvements latéraux relatifs de la caisse du véhicule par rapport au train arrière de celui-ci et perturbant la tenue de route du véhicule.

La présente invention a pour but d'éliminer les inconvénients ci-dessus en proposant un train arrière de véhicule automobile, du type comprenant deux bras tirés, dont chaque extrémité avant est montée pivotante par rapport à la caisse du véhicule autour d'un axe parallèle à l'axe des roues arrière ; une traverse déformable solidaire des extrémités arrière des deux bras tirés, aux extrémités de laquelle sont montées pivotantes les roues arrière ; deux amortisseurs et deux ressorts hélicoïdaux reliant la traverse à la caisse du véhicule; et une barre dite Panhard reliée de façon articulée à l'une de ses deux extrémités à la caisse au voisinage de l'axe de pivotement de l'un des deux bras tirés et qui, vue de dessus, est montée de façon oblique; train arrière caractérisé en ce que la barre Panhard a son autre extrémité reliée de façon articulée à l'autre bras et située au voisinage de l'axe des roues arrière.

La barre Panhard peut être droite si le train arrière est porteur ou peut comporter une partie en courbe gauche contournant un obstacle, tel qu'une transmission aux roues arrière ou une portion de l'échappement du véhicule lorsque le train arrière est moteur.

Selon une autre caractéristique de l'invention, les deux axes d'articulation de la barre Panhard sont situés dans un plan approximativement horizontal et sont perpendiculaires à la barre ou à l'axe fictif reliant les deux points d'articulation de la barre Panhard.

Avantageusement, les articulations utilisées pour une barre Panhard droite conviennent également pour une barre Panhard en courbe gauche.

Selon encore une autre caractéristique de l'invention, l'une des deux articulations de la barre Panhard est flexible en torsion et l'autre articulation est également flexible en torsion ou est rigide en torsion de façon que pendant le débattement de l'ensemble bras-traverse, chaque point de la barre Panhard décrive:
- soit un arc de cercle centré sur l'axe d'articulation de la barre Panhard à la caisse ;
- soit un arc de cercle centré sur un axe fictif reliant le point d'articulation à la caisse du bras tiré portant l'articulation de la barre Panhard au point d'articulation de la barre Panhard à la caisse ;
- soit une courbe comprise entre les deux arcs de cercle définis ci-dessus.

Avantageusement, chaque articulation de la barre Panhard est logée dans une chape de support de l'axe d'articulation correspondant et comprend une rotule en butée sur les ailes de la chape et entourée d'un bloc en élastomère qui est situé dans un alésage de l'extrémité de la barre Panhard.

La traverse déformable comprend une partie centrale à section transversale en Y de grande flexibilité en torsion, disposée parallèlement à l'axe des roues arrière dans le même plan horizontal et située en avant ou en arrière de l'axe des roues selon que le train est porteur ou moteur.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels.

La figure 1 est une vue de dessus d'un train arrière de véhicule automobile conforme à l'invention.

La figure 2 est une vue du train arrière suivant la flèche II de la figure 1.

La figure 3 est une vue en coupe suivant la ligne III-III de la figure 1.

La figure 4 est une vue identique à celle de la figure 1 mais représentant un second mode de réalisation du train arrière de l'invention.

La figure 5 est une vue du train arrière suivant la flèche V de la figure 4.

La figure 6 est une vue en coupe suivant la ligne VI-VI de la figure 4.

Les figures 7 et 8 représentent schématiquement respectivement deux possibilités d'évolution de la partie centrale de la barre Panhard suivant les articulations de celle-ci pendant des débattements du train arrière.

La figure 9 représente en coupe une articulation de la barre Panhard.

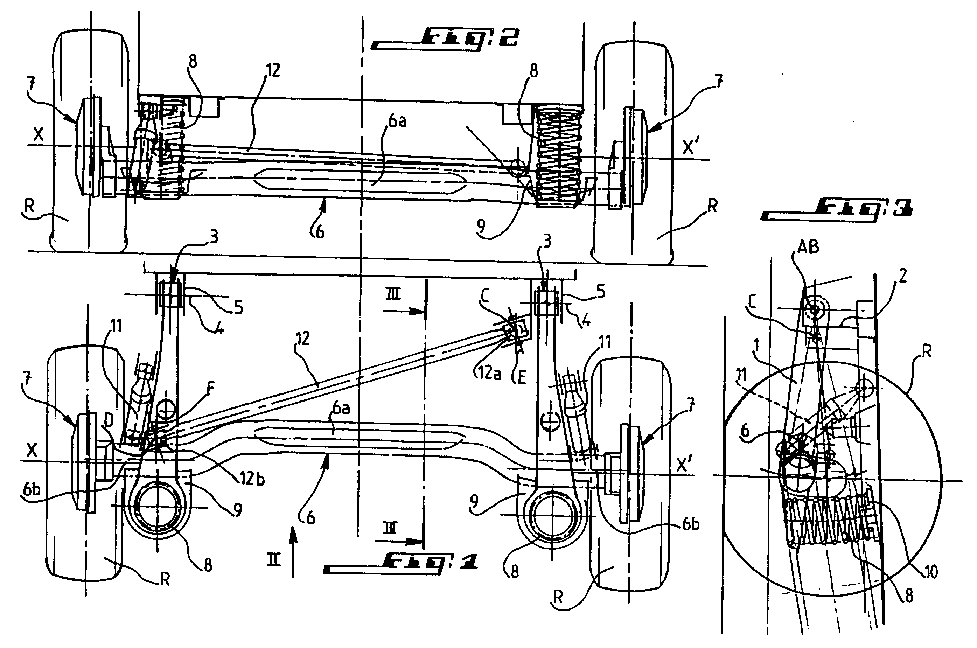

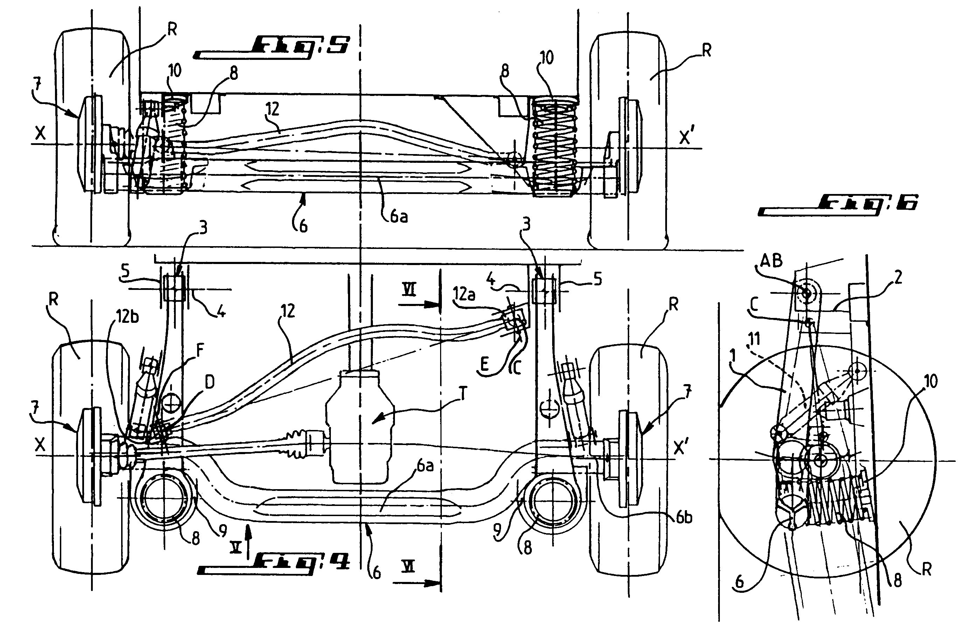

En se reportant aux figures 1 et 2, le train arrière pour véhicule automobile comprend deux bras tirés parallèles 1, dont chaque extrémité avant est montée pivotante par rapport à la caisse 2 du véhicule, par l'intermédiaire d'une articulation élastique 3, autour d'un axe 4 parallèle à l'axe X-X' des roues arrière R du véhicule et supporté par une partie formant chape 5 solidaire de la caisse 2.

L'axe 4, qui n'a été représenté qu'en traits mixtes, peut être constitué par un boulon traversant perpendiculairement les ailes de la partie formant chape 5 et rigidement fixé à celles-ci. Les articulations 3 ont une grande rigidité radiale et une flexibilité moyenne suivant l'axe 4.

Le train arrière comprend de plus une traverse déformable 6 aux extrémités de laquelle sont montées pivotantes les roues arrière R et qui est solidaire, par exemple par soudage, des extrémités arrière des deux bras tirés 1 pour les relier entre eux. La traverse 6 comprend une partie centrale 6a à section transversale en forme de Y, de très grande flexibilité en torsion, rigide en flexion et disposée parallèlement à l'axe X-X' des roues arrière R approximativement dans le même plan horizontal. La traverse 6, dans la mesure où le train arrière est porteur, est située en avant de l'axe X-X' des roues arrière. La traverse 6 comprend de plus deux parties droites tubulaires 6b solidaires de la partie centrale 6a et portant à leurs extrémités les fusées 7 des roues arrière R. La traverse 6 permet un débattement des roues arrière R suivant une bonne flexibilité verticale et assure en même temps la fonction anti-devers par la déformation de la traverse 6.

La suspension du train arrière est assurée par deux ressorts hélicoïdaux 8 sensiblement parallèles et verticaux situés très près de l'axe X-X' et chacun en appui sur une coupelle inférieure 9 solidaire de la traverse 6 et une coupelle supérieure 10 solidaire de la caisse 2 du véhicule. Deux amortisseurs 11, parallèles et inclinés vers l'avant du véhicule, sont reliés de façon articulée à leurs deux extrémités respectivement à la traverse 6 et à la caisse 2 du véhicule.

Pour assurer le maintien et le guidage latéral du train arrière dans ses mouvements de suspension, une barre 12, du type Panhard, est reliée de façon articulée à ses deux extrémités 12a, 12b respectivement à la caisse 2 du véhicule et au bras tiré de gauche 1, étant bien entendu que les deux extrémités 12a, 12b peuvent être reliées respectivement au bras tiré de droite 1 et à la caisse 2 du véhicule. Vue de dessus, la barre 12, qui est droite et disposée dans un plan approximativement horizontal, est montée de façon oblique et a son extrémité 12a située au voisinage de l'axe de pivotement 4 du bras tiré 1 et son autre extrémité située au voisinage de l'axe X-X' des roues arrière R. L'axe longitudinal de la barre 12 joignant les deux points d'articulation C et D se trouve ainsi presque suivant une diagonale du quadrilatère formé par un axe transversal passant par les points d'articulation A et B respectivement des deux bras 1, l'axe X-X' des roues arrière R et les bras tirés 1. Les deux axes d'articulation E et F de la barre Panhard 12 sont situés dans un plan approximativement horizontal et sont perpendiculaires à la barre 12, en position moyenne de débattement de l'ensemble bras 1 - traverse 6.

La disposition de la barre 12 ci-dessus est définie pour satisfaire une épure de débattement qui réduit au maximum les mouvements latéraux relatifs de la caisse 2 par rapport au train arrière au cours des mouvements en pompage du véhicule et donc d'obtenir le meilleur maintien et guidage du train arrière en latéral par rapport à la caisse 2.

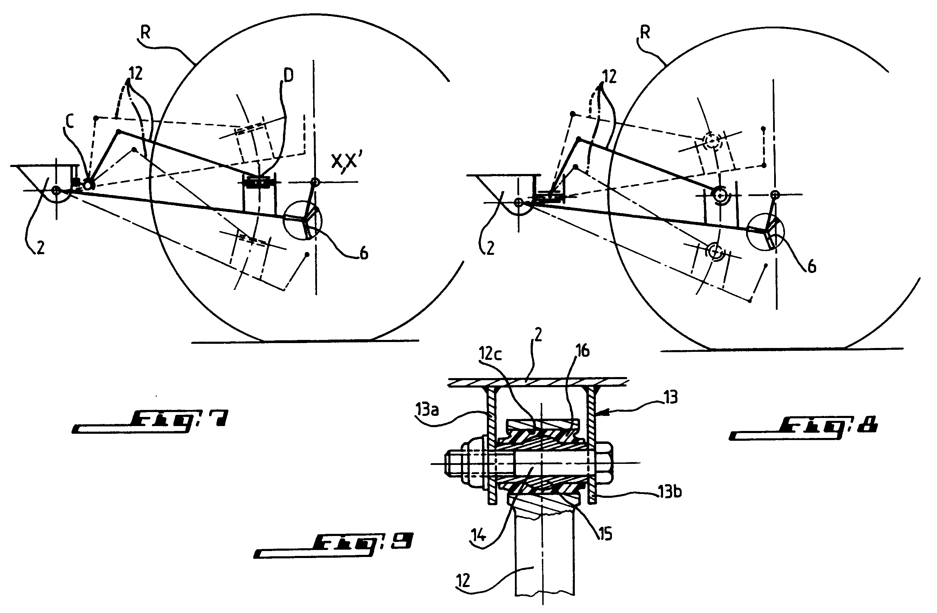

Le train arrière tel que représenté aux figures 4 à 6 est du type moteur et ne diffère de celui des figures 1 à 3 que par la barre Panhard 12 qui, au lieu d'être droite, est en courbe gauche notamment au niveau de sa partie centrale pour éviter dans ses débattements toute interférence avec divers organes mécaniques présents sous la partie arrière du train, tels qu'une transmission avec pont arrière T comme représenté ou des dispositifs d'échappement de plus en plus encombrants compte tenu des normes actuels. La forme de la barre 12 permet ainsi de contourner l'obstacle mécanique et la traverse 6 est disposée avec sa partie déformable 6a en arrière de l'axe X-X' des roues arrière R. Suivant les obstacles à éviter, la barre oblique 12 permet dans le cas d'un véhicule à pont arrière de faire évoluer dans les débattements des bras tirés 1 une section de la barre dans la partie médiane du véhicule au niveau avant du pont arrière, dont le volume correspondant est le moins encombrant.

Les axes d'articulation E et F de la barre 12 sont, comme dans le premier mode de réalisation, situés dans un plan approximativement horizontal et sont perpendiculaires à l'axe fictif reliant les deux points d'articulation C et D de la barre, les articulations de la barre en courbe gauche 12 convenant également pour une barre droite.

Les articulations de la barre 12 peuvent être choisies et adaptées suivant les besoins et les encombrements sous la partie arrière de la caisse 2 de façon que le déplacement dans l'espace du déport dans sa partie centrale de la barre 12 soit tel que cette dernière n'intercepte pas l'obstacle mécanique présent.

Les figures 7 et 8 représentent l'évolution de la partie centrale de la barre 12 lors des débattements.

La figure 7 représente le cas où l'articulation de la barre 12 à la caisse 2 du véhicule est flexible en torsion, c'est-à-dire libre en rotation autour de l'axe reliant les points d'articulation C et D, et constituée ainsi par une articulation à rotule tandis que l'articulation de la barre 12 au bras 1 est une articulation à grande rigidité élastique en rotation autour de l'axe reliant les points d'articulation C et D et donc très rigide en torsion. Cette dernière articulation, de part sa rigidité, devient prioritaire dans la commande de mouvement et implique à la barre 12 de garder sa position relative par rapport au bras 1 de sorte que l'on obtient un déplacement de la barre 12 similaire à une rotation fictive autour d'un axe passant par les points d'articulation A et C ou rotation des génératrices d'un cône. Si, de par sa forme en sa partie centrale la barre 12 a une section qui s'approche de l'axe fictif passant par les points d'articulation A et C, les mouvements dans l'espace de cette partie seront réduits et tendront à être pratiquement nuls si la section est confondue avec cet axe.

Suivant la configuration représentée en figure 8, le point d'articulation de la barre 12 à la caisse 2 du véhicule est une articulation élastique de très grande rigidité en rotation autour de l'axe passant par les points d'articulation C et D et donc très rigide en torsion tandis que l'autre articulation de la barre 12 est une articulation du type à rotule permettant ainsi une grande flexibilité en torsion. L'articulation côté caisse 2 de la barre 12, de par sa rigidité, est donc prioritaire et les mouvements des battements de l'ensemble bras tiré 1 et traverse 6 n'entraînent pas en rotation autour de l'axe passant par les points d'articulation C et D de la barre 12. On obtient donc un débattement pratiquement dans un plan vertical à la hauteur de l'arc près décrit par le point d'articulation D associé au débattement angulaire autour de l'axe passant par les points d'articulation A et B des bras tirés 1.

Ainsi, chaque point de la barre 12 décrit, en référence à la figure 7, un arc de cercle centré sur l'axe fictif passant par les points d'articulation A et C et, en référence à la figure 8, un arc de cercle centré sur l'axe d'articulation de la barre 12 à la caisse 2 du véhicule.

A partir des deux possibilités extrêmes d'évolution de la partie centrale de la barre 12 décrites respectivement en référence aux figures 7 et 8, il est avantageux de choisir les deux articulations de la barre 12 et d'ajuster leur rigidité et/ou flexibilité en torsion de façon à obtenir une multitude de possibilités d'évolution de la partie centrale de la barre 12 situées entre ces deux possibilités extrêmes. De la sorte, on obtient un débattement de la barre 12 tel qu'il n'intercepte pas un obstacle mécanique tel que la transmission T à pont arrière. Chaque point de la barre 12 décrira une courbe comprise entre les deux arcs de cercle définis précédemment en référence aux figures 7 et 8.

La figure 9 représente un mode de réalisation de chacune des deux articulations de la barre 12. Chaque articulation est ainsi logée dans une chape 13 solidaire, par exemple par soudage, du châssis 2 comme représenté ou du bras tiré 1 et servant de support à l'axe d'articulation E ou F constitué par un boulon 14 traversant transversalement les deux ailes 13a et 13b de la chape 13. Chaque articulation comprend de plus une rotule 15 en butée sur les deux ailes 13a, 13b de la chape 13 et solidaire d'un bloc en élastomère 16 l'entourant qui est monté de façon solidaire dans un alésage 12c coaxialement à celui-ci de l'extrémité 12a ou 12b de la barre 12.

La barre 12 disposée en oblique permet donc de réduire et de rendre pratiquement nuls les déplacements relatifs latéraux de la caisse 2 par rapport au train arrière lors des mouvements en pompage du véhicule et permet également d'avoir les mêmes points d'ancrage à la caisse 2 et au train arrière, à la forme près de la barre 12, de façon que ces points permettent de faire évoluer dans les débattements des bras tirés 1 la portion centrale de la barre 12 sans qu'elle intercepte un obstacle mécanique, tel qu'une transmission à pont arrière.

## Revendications

1. Train arrière de véhicule automobile, du type comprenant deux bras tirés (1), dont chaque extrémité avant est montée pivotante par rapport à la caisse (2) du véhicule autour d'un axe parallèle à l'axe (X-X') des roues arrière (R) ; une traverse déformable (6) solidaire des extrémités arrière des deux bras tirés (1), aux extrémités de laquelle sont montées pivotantes les roues arrière (R) ; deux amortisseurs (11) et deux ressorts hélicoïdaux (8) reliant la traverse (6) à la caisse (2) du véhicule ; et une barre dite Panhard (12) reliée de façon articulée à l'une de ses deux extrémités (12a) à la caisse (2) au voisinage de l'axe de pivotement de l'un des deux bras tirés et qui, vue de dessus, est montée de façon oblique ; caractérisé en ce que la barre Panhard (12) a son autre extrémité (12b) reliée de façon articulée à l'autre bras (1) et située au voisinage de l'axe (X-X') des roues arrière (R).

2. Train arrière selon la revendication 1, caractérisé en ce que la barre Panhard (12) comprend une partie courbe gauche si le train est moteur et contournant un obstacle, tel qu'une transmission (T) aux roues arrière (R) ou une portion de l'échappement du véhicule.

3. Train arrière selon la revendication 1, caractérisé en ce que la barre Panhard (12) est droite si le train est porteur.

4. Train arrière selon l'une des revendications précédentes, caractérisé en ce que les deux axes d'articulation (E, F) de la barre Panhard (12) sont situés dans un plan approximativement horizontal et sont perpendiculaires à la barre (12) ou à l'axe fictif reliant les deux points d'articulation (C, D) de la barre Panhard (12).

5. Train arrière selon l'une des revendications précédentes, caractérisé en ce que les articulations utilisées pour une barre Panhard droite (12) conviennent également pour une barre Panhard en courbe gauche (12).

6. Train arrière selon l'une des revendications précédentes, caractérisé en ce que l'une des deux articulations de la barre Panhard (12) est flexible en torsion et l'autre articulation rigide ou flexible en torsion de façon que pendant le débattement de l'ensemble bras tirés (1) - traverse (6), chaque point de la barre Panhard (12) décrive :
- soit un arc de cercle centré sur l'axe d'articulation de la barre Panhard (12) à la caisse (2);
- soit un arc de cercle centré sur un axe fictif reliant le point d'articulation (A) à la caisse (2) du bras tiré (1) portant l'articulation de la barre Panhard (12) au point d'articulation (C) de la barre Panhard (12) à la caisse (2);
- soit une courbe comprise entre les deux arcs de cercle définis ci-dessus.

7. Train arrière selon l'une des revendications précédentes, caractérisé en ce que chaque articulation de la barre Panhard (12) est logée dans une chape (13) de support de l'axe d'articulation correspondant et comprend une rotule (15) en butée sur les ailes (13a, 13b) de la chape (13) et entourée d'un bloc en élastomère (16) qui est monté dans un alésage (12c) de l'extrémité de la barre Panhard (12).

8. Train arrière selon l'une des revendications précédentes, caractérisé en ce que la traverse déformable (6) comprend une partie centrale (6a) à section transversale en Y de grande flexibilité en torsion, disposée parallèlement à l'axe (X-X') des roues (R) dans le même plan horizontal et située en avant ou en arrière de l'axe (X-X') des roues (R) selon que le train est porteur ou moteur.

## Patentansprüche

1. Hinterradachssatz für ein Kraftfahrzeug, derjenigen Gattung mit zwei gezogenen Armen (1), deren jedes Vorderende in Bezug auf den Kasten (2) des Fahrzeugs um eine zu der Achse (X-X') der Hinterräder (R) parallele Achse herum schwenkbar angeordnet ist; einem mit den Hinterenden der beiden gezogenen Arme (1) fest verbundenen verformbaren Querträger (6), an dessen Ende die Hinterräder (R) schwenkbar gelagert sind; zwei Dämpfern (11) und zwei Wendelfedern (8), die den Querträger (6) mit dem Kasten (2) des Fahrzeugs verbinden ; und einer sogenannten Panhard Stange (12), die mit einem ihrer beiden Enden (12a) an dem Kasten (2) im Bereich der Schwenkachse des einen der beiden gezogenen Arme in gelenkiger Weise verbunden ist und die, von oben gesehen, in schräger Weise angeordnet ist; dadurch gekennzeichnet, dass die Panhard Stange (12) mit ihrem anderen Ende (12b) mit dem anderen Arm (1) in gelenkiger Weise verbunden und im Bereich der Achse (X-X') der Hinterräder (R) gelegen ist.

2. Hinterradachssatz gemäss Anspruch 1, dadurch gekennzeichnet, dass die Panhard Stange (12) einen raumkurvenförmigen Teil umfasst, wenn der Radachsatz antreibend ist und wobei dieser Teil um ein Hindernis, wie eine Kraftübertragung (T) an die Hinterräder (R) oder einen Teil des Auspuffs des Fahrzeugs herumführt.

3. Hinterradachssatz nach Anspruch 1, dadurch gekennzeichnet, dass die Panhard Stange (12) geradlinig ist, wenn der Radachssatz antreibend ist.

4. Hinterradachssatz gemäss einem der vorangehenden Ansprüche, dadurch gekennzeichnet, dass die beiden Gelenkachsen (E, F) der Panhard Stange (12) in einer annähernd waagerechten Ebene gelegen sind und senkrecht zu der Stange (12) oder zu einer die beiden Gelenkpunkte (C, D) der Panhard Stange (12) verbindenden Scheinachse senkrecht verlaufen.

5. Hinterradachssatz gemäss einem der vorangehenden Ansprüche, dadurch gekennzeichnet, dass die bei einer geradlinigen Panhard Stange (12) verwendeten Gelenke auch für eine raumkurvenförmige Panhard Stange (12) geeignet sind.

6. Hinterradachssatz gemäss einem der vorangehenden Ansprüche, dadurch gekennzeichnet, dass die eine der beiden Gelenke der Panhard Stange (12) verdrehungsbiegsam und das andere Gelenk steif oder verdrehungsbiegsam ist, so dass während des Bewegungsausschlags der aus den gezogenen Armen (1) und dem Querträger (6) bestehenden Gesamtheit jeder Punkt der Panhard Stange (12) :
- entweder einen auf der Achse zur Anlenkung der Panhard Stange (12) an dem Kasten (2) zentrierten Kreisbogen ;
- oder einen auf der den Punkt (A) zur Anlenkung des Kastens (2) des das Gelenk der Panhard Stange (12) tragenden gezogenen Armes (1) mit dem Punkt (C) zur Anlenkung der Panhard Stange (12) an dem Kasten (2) verbindenden Scheinachse zentrierten Kreisbogen ;
- oder eine zwischen den beiden hier oben bestimmten Kreisbögen gelegene Kurve
beschreibt.

7. Hinterradachssatz gemäss einem der vorangehenden Ansprüche, dadurch gekennzeichnet, dass jedes Gelenk der Panhard Stange (12) in einem Gabelbügel (13) zur Lagerung des entsprechenden Gelenkzapfens aufgenommen ist und eine sich im Anschlag an den beiden Schenkeln (13a, 13b) des Gabelbügels (13) befindende und durch einen Block aus Elastomer umgebene Gelenkkugel (15) aufweist, welcher Block in einer Bohrung (12c) des Endes der Panhard Stange (12) angeordnet ist.

8. Hinterradachssatz gemäss einem der vorangehenden Ansprüche, dadurch gekennzeichnet, dass der verformbare Querträger (6) einen parallel zur Achse (X-X') der Räder (R) in derselben waagerechten Ebene angeordneten mittleren Teil (6a) Y-förmigen Querschnitts mit grosser Verdrehungsbiegsamkeit, der vor oder hinter der Achse (X-X') der Räder (R), je nachdem der Radachssatz tragend oder antreibend ist, gelegen ist, aufweist.

## Claims

1. Rear wheel axle assembly for an automotive vehicle, of the type comprising two dragged arms (1) each forward end of which is pivotally mounted with respect to the body (2) of the vehicle about an axis parallel to the axis (X-X') of the rear wheels (R) ; a deformable cross member (6) made fast to the back ends of both dragged arms (1) and at the ends of which are pivotally mounted the rear wheels (R) ; two dampers (11) and two helical springs (8) connecting the cross member (6) to the body (2) of the vehicle and a so-called Panhard bar (12) connected in a pivoted manner with one of its two ends (12a) to the body (2) in the vicinity of the pivot axis of one of the two dragged arms and which, seen from above, is mounted in an oblique manner; characterized in that the Panhard bar (12) has its other end (12b) connected in a pivoted manner to the other arm (1) and located in the vicinity of the axis (X-X') of the rear wheels (R).

2. Rear wheel axle assembly according to claim 1, characterized in that the Panhard bar (12) comprises a warped curved portion if the wheel axle assembly is driving and turning round an obstacle such as a transmission (T) to the rear wheels (R) or a portion of the exhaust of the vehicle.

3. Rear wheel axle assembly according to claim 1, characterized in that the Panhard bar (12) is straight if the axle assembly is carrying.

4. Rear wheel axle assembly according to one of the foregoing claims, characterized in that both pivot axes (E, F) of the Panhard bar (12) are located in an approximately horizontal plane and are perpendicular to the bar (12) or to the fictitious axis connecting both pivot points (C, D) of the Panhard bar (12).

5. Rear wheel axle assembly according to one of the foregoing claims, characterized in that the pivotal connections used for a straight Panhard bar (12) are also suitable for a Panhard bar with a warped curve (12).

6. Rear wheel axle assembly according to one of the foregoing claims, characterized in that one of the two pivotal connections of the Panhard bar (12) is flexible in torsion and the other pivotal connection is rigid or flexible in torsion so that during the excursion motion of the dragged arms (1)-cross member (6)-assembly, each point of the Panhard bar (12) describes:
- either an arc of a circle centered on the axis of pivotal connection of the Panhard bar (12) to the body (2);
- or an arc of a circle centered on a fictitious axis connecting the point (A) of pivotal connection to the body (2) of the dragged arm (1) carrying the pivotal connection of the Panhard bar (12) to the point (C) of pivotal connection of the Panhard bar (12) to the body (2);
- or a curve comprised between both arcs of a circle defined hereabove.

7. Rear wheel axle assembly according to one of the foregoing claims, characterized in that each pivotal connection of the Panhard bar (12) is accommodated in a clevis (13) for supporting the corresponding pivot pin and comprises a knuckle (15) in abutment on the legs (13a, 13b) of the clevis (13) and surrounded by a block of elastomer (16) which is mounted in a bore (12c) of the end of the Panhard bar (12).

8. Rear wheel axle assembly according to one of the foregoing claims, characterized in that the deformable cross member (6) comprises a central portion (6a) with a Y-shaped cross-section of great flexibility in torsion, disposed in parallel relation to the axis (X-X') of the wheels (R) in the same horizontal plane and located forward or backward of the axis (X-X') of the wheels (R) according as the wheel axle assembly is carrying or driving.
